# FASCICULE DE BREVET EUROPEEN

(11) **EP 0 900 414 B1**
(45) Date de publication et mention de la délivrance du brevet: **05.09.2001**
(21) Numéro de dépôt: 97918228.4
(22) Date de dépôt: 15.04.1997
(51) Int. Cl.: G05B 19/042

(54) **PROCEDE ET EQUIPEMENT POUR L'OPTIMISATION DE LA PRODUCTION**
VERFAHREN UND VORRICHTUNG ZUR PRODUKTIONSOPTIMIERUNG
METHOD AND EQUIPMENT FOR OPTIMIZING PRODUCTION

(30) Priorité: 18.04.1996 FR 9604993
(43) Date de publication de la demande: 10.03.1999
(73) Titulaire: Marrie, Stephane, 42400 Saint-Chamond (FR)
(72) Inventeur: MARRIE, Stéphane, F-42400 Saint-Chamond (FR)
(74) Mandataire: Richebourg, Michel François
(86) Numéro de dépôt international: FR9700671
(87) Numéro de publication internationale: WO9739390

(56) Documents cités:
- EP-A- 0 467 257
- EP-A- 0 482 523
- EP-A- 0 660 210

## Description

La présente invention concerne le secteur technique de la production industrielle et plus particulièrement de la productivité de lignes " machine ".

Dans l'industrie, les machines sont pilotées par un " automate " lequel commande certaines fonctions de la machine ; l'automate reçoit lui-même des ordres de l'opérateur par, dans les configurations les plus simples, un panneau de commande.

On a imaginé dans l'art antérieur des interfaces " homme-machine " dont la fonction est de transcrire sous forme de fonctions et de manipulations simples des opérations et fonctions complexes de l'automate et donc de la machine. Ainsi, les fonctions complexes deviennent accessibles à l'opérateur et/ou celui-ci les exécute ou les commande plus rapidement.

Parmi les interfaces connus on trouve ceux comportant l'affichage des pannes machine et des états machine, ainsi que ceux proposant par exemple une aide au dépannage, laquelle peut comprendre une fonction d'aide au diagnostic.

On connaît aussi les listes de vérifications ou " check-lists ", la gestion de la maintenance de la machine (GMAO) qui est une fonction externe permettant de délivrer des bons d'intervention sur telle pièce dont on soupçonne par l'analyse qu'elle devrait devenir défectueuse à tel délai (maintenance dite préventive), la maintenance dite conditionnelle qui intervient lorsqu'un seuil critique est atteint (vibrations, qualité de l'huile, fréquence de pannes, ....), ce qui déclenche une intervention.

On peut, selon un premier aspect de l'invention, classifier les pannes selon différentes méthodes.

On peut par exemple différencier les messages d'alarme non critiques (prévention de la panne), les alarmes critiques qui provoquent un arrêt machine, avec imputation du temps d'arrêt à la panne en cause, les pannes dites de remise à zéro ou RAZ qui entraînent, de par leur gravité et/ou de par leur moment d'apparition, une obligation de remise à zéro d'une opération complète sur une chaîne (par exemple, recommencer toute l'opération de stérilisation) et les pannes dites de " plantage " qui obligent à relancer toute la production, c'est-à-dire à relancer toutes les opérations préliminaires à un départ en production, avec éventuellement perte de production en cas de produit fragile, de rupture de chaîne du froid etc....

On peut donc, selon ce premier aspect, classifier les pannes selon divers systèmes, les identifier, et construire des algorithmes de traitement de chaque type ou groupe de pannes.

Par " panne " on entend dans tout le texte tout incident machine de quelque gravité que ce soit, capable (ou non) (exemples des pannes dites " non documentées ") de par le souhait des concepteurs de la machine, de générer une " alarme ".

Par " alarme ", on comprendra tout signal généré par une " panne " en vue d'être géré.

Par " machine " ou " ligne machine " ou " production " etc... on entend ici tout type de production industrielle ou semi-industrielle comportant un certain degré d'automatisation et un système de gestion des alarmes, ou capable d'en être doté, et ce dans tout type d'industrie.

On connaît encore un système d'optimisation de la productivité dit " TPM " ou " Total Production Maintenance ", Système Intégral de Maintenance au niveau de la Production, qui distingue de manière générale deux types de pannes, les pannes chroniques (celles dont la fréquence d'apparition est importante) et les pannes imprévues (qui sont, elles, rares, mais coûteuses en temps d'arrêt machine). Bien que très utile, et plus complexe que décrit ci-dessus, ce système se limite comme d'autres à un traitement statistique des pannes et au déclenchement de certaines actions soit de prévention, soit de réparation.

Ces systèmes connus peuvent être plus ou moins sophistiqués, mais ils présentent un point commun qui est qu'ils n'aident pas au calcul précis ET automatique de la productivité.

En effet, dans leurs algorithmes, ces systèmes identifient une panne, la classent dans une des catégories qui leur ont été imposées, et affectent le temps d'arrêt machine (ou tout autre indice de perturbation de la production) à cette panne.

De cette affectation découlent ensuite des calculs statistiques et des recommandations d'actions comme le remplacement de telle pièce, des diagnostics d'usure normale ou anormale, etc...

Il s'agit donc d'une approche très systématique qui se borne à constater des états de fait comme une panne, et à dresser des calculs résultants de ces états de fait.

Selon l'invention, on propose un système de gestion de la production qui intègre, dans le module de gestion des pannes, une étape de reconnaissance de la panne initiale ou première d'une panne aval ou secondaire ayant donné lieu à une alarme.

Selon l'invention, on affecte le temps d'arrêt machine à la panne première. Ainsi, les calculs dérivés dirigent les actions vers les causes premières ou " réelles " des pannes, et non plus vers leurs effets visibles mais " secondaires " qui ne se seraient pas produits sans l'apparition de la panne première.

On affecte donc un critère de " culpabilité " à chaque panne, avec éventuellement des coefficients de pondération qui seront à la portée de l'homme de métier sur chaque type de ligne machine.

Pour prendre un exemple, supposons un palier de roulement dont le graissage est évidemment contrôlé, avec par exemple l'intervention d'un capteur de débit de fluide de graissage. Établissons l'hypothèse que ce capteur cesse de fonctionner : il y a donc émission d'une " panne capteur pression". Un seuil d'alarme température sera certainement franchi si le système de sécurité est bien conçu : seconde émission d'une " panne capteur température ".

Si, pour la remise en route, il faut manoeuvrer un panneau etc... lui-même sous surveillance (panneau d'accès, interrupteur de circuit électrique etc...) troisième ou quatrième alarmes enregistrées par le système. Si la réaction de l'ensemble est trop lente, un incident mécanique peut survenir, par exemple déformation d'un élément mécanique surchauffé : cinquième alarme.

Dans les systèmes classiques, chaque alarme sera traitée simplement comme telle et le temps d'arrêt lui sera affecté. Ainsi l'opérateur de maintenance recevra-t-il la connaissance de deux, trois, quatre, cinq pannes toutes causées par une seule, la première. Les calculs statistiques seront exacts, mais leur interprétation faussée : ainsi, dans l'exemple ci-dessus, les statistiques pourront suggérer que la conception de l'élément mécanique est à revoir, alors que seul le capteur de pression devrait être en cause.

Il va donc en résulter des erreurs de diagnostics, de prévision d'usure, et donc des interventions totalement inutiles ou largement prématurées, tandis que la cause principale ne sera pas éliminée, ou pas assez rapidement.

Il en résultera donc une baisse de productivité qui aurait pu être évitée. L'invention, en attribuant un critère de " responsabilité première " à une panne, permet de repérer les pannes qui sont à traiter réellement, et d'éliminer des statistiques les pannes qui ne sont pas survenues spontanément. Ainsi, le gestionnaire pourra ordonner le traitement des causes principales de pannes, et ne plus ordonner d'interventions inutiles.

On franchit alors un seuil en gain de productivité, car l'invention ne joue pas sur une amélioration plus ou moins marginale de la sophistication d'un algorithme, et donc sur un raffinement plus ou moins important de ses calculs, mais opère selon un concept radicalement différent, qui est de ne plus traiter que les pannes dont le traitement est utile.

On atteint également une totale automatisation du suivi d'activité..

La réalisation pratique de l'invention, en s'appuyant sur le concept ci-dessus, va donc nécessiter un algorithme qui reconnaisse les liens entre les divers éléments " sous contrôle ". Par élément sous contrôle, on désigne ici toute pièce, tout capteur, etc... dont le concepteur de la machine a voulu, selon son schéma de sécurité et de contrôle de la production, que sa défaillance déclenche une alarme.

Dans l'exemple ci-dessus, l'algorithme devra donc connaître que si la pression de fluide est anormale, le capteur de température va afficher une valeur anormale (avec un temps de réaction lui-même calculable par un algorithme) qui va déclencher une alarme ; qu'il faudra remplacer le capteur en ouvrant un panneau sous contrôle, lequel émettra alors une alarme. Avec cette connaissance, le système va affecter une seule fois le temps d'arrêt machine à une seule panne, celle du capteur. Le gestionnaire ne se préoccupera donc ni de l'aspect température, ni du panneau, mais seulement du capteur de pression.

Naturellement, des coefficients devront être affectés. Dans l'exemple ci-dessus, il pourra être prévu d'affecter 90 % du temps au capteur de pression, 2 % au panneau (car usure en cas d'ouvertures donc à intégrer dans le programme éventuel de maintenance préventive) et 8 % , non pas au capteur de température, mais à l'élément mécanique qui a pu surchauffer même brièvement : cette surchauffe doit, elle aussi, être intégrée dans la maintenance préventive de cet élément.

L'homme de métier comprendra qu'il est impossible de prévoir tous les exemples possibles.

L'invention, sous forme d'un système d'automatisation totale du suivi d'activité, comportant des systèmes logiques interconnectés, comprend donc trois éléments ou modules essentiels :
1. Module de connaissance des interactions " machine " de toute nature, susceptibles d'avoir une répercussion au niveau des pannes, entre les éléments sous contrôle
2. Module de reconnaissance, pour chaque panne, de la panne première, à partir des informations contenues dans le Module 1
3. Module d'affectation du temps d'arrêt (ou de tout autre élément d'appréciation choisi) à la panne première et éventuellement, avec les coefficients appropriés, aux autres éléments sous contrôle qui, du fait de la panne première, soit ont déclenché une alarme, soit ont dû être affectés par l'une des pannes première ou secondaire(s) même s'ils n'ont pas généré d'alarme eux-mêmes.

On comprendra que, en fonction du degré de sophistication choisi, le module 1 pourra connaître les interactions entre tous les éléments sous contrôle, ou bien seulement entre certains de ces éléments par exemple ceux susceptibles de provoquer les arrêts machine les plus coûteux. Par "connaissance " il faut entendre que les liaisons fonctionnelles de la machine seront entrées dans une banque de données du système. Pour chaque élément sous contrôle, le système connaît donc le schéma fonctionnel, ligne amont, ligne aval, et peut déterminer si la panne a une origine interne ou externe.

On comprendra également que les coefficients (de pondération) seront déterminés en fonction d'une part de la gravité potentielle de la panne de l'élément, et d'autre part des caractéristiques de cet élément .

Dans les deux cas, le concepteur effectuera des choix en fonction de la machine ou ligne machine et de la sophistication souhaitée.

Naturellement, les trois modules essentiels selon l'invention pourront faire partie d'un système plus vaste, et seront interconnectés par des moyens mécaniques, électriques et électroniques connus en soi.

Les modules selon l'invention sont eux-mêmes constitués d'éléments et de systèmes logiques dont la structure et l'agencement sont connus en soi et sont à la portée de l'homme du métier.

L'invention concerne également un procédé pour l'optimisation de la production, notamment de lignes " machine ", **caractérisé en ce qu**'il comprend trois étapes :
1. connaissance des interactions " machine " de toute nature, susceptibles d'avoir une répercussion au niveau des pannes, entre les éléments sous contrôle
2. reconnaissance, pour chaque panne, de la panne première, à partir des informations connues dans l'étape 1
3. affectation du temps d'arrêt (ou de tout autre élément d'appréciation choisi) à la panne première et éventuellement, avec les coefficients appropriés, aux autres éléments sous contrôle qui, du fait de la panne première, soit ont déclenché une alarme, soit ont dû être affectés par l'une des pannes première ou secondaire(s) même s'ils n'ont pas généré d'alarme eux-mêmes.

## Revendications

1. Système d'automatisation totale du suivi d'activité de lignes " machine ", comportant des systèmes logiques interconnectés, **caractérisé en ce qu**'il comprend trois modules :
1. Module de connaissance des interactions " machine " de toute nature, susceptibles d'avoir une répercussion au niveau des pannes, entre les éléments sous contrôle
2. Module de reconnaissance, pour chaque panne, de la panne première, à partir des informations contenues dans le module 1
3. Module d'affectation du temps d'arrêt (ou de tout autre élément d'appréciation choisi) à la panne première et éventuellement, avec les coefficients appropriés, aux autres éléments sous contrôle qui, du fait de la panne première, soit ont déclenché une alarme, soit ont dû être affectés par l'une des pannes première ou secondaire(s) même s'ils n'ont pas généré d'alarme eux-mêmes.

2. Système selon la revendication 1, **caractérisé en ce que** le module 1 ne possède la connaissance que d'une partie des interactions machines, entre seulement une partie des éléments sous contrôle.

3. Système selon la revendication 1 ou 2, **caractérisé en ce que** le module 1 comporte une banque de données dans laquelle les liaisons fonctionnelles de la machine sont entrées.

4. Système selon la revendication 3, **caractérisé en ce que** le module 1 connaît le schéma fonctionnel de chaque élément sous contrôle, ligne amont, ligne aval, et peut déterminer si la panne a une origine interne ou externe.

5. Machine ou ligne machine comportant un système selon l'une quelconque des revendications 1 à 4.

6. Procédé pour l'optimisation de la production, notamment de lignes " machine ", **caractérisé en ce qu**'il comprend trois étapes :
1. connaissance des interactions " machine " de toute nature, susceptibles d'avoir une répercussion au niveau des pannes, entre les éléments sous contrôle
2. reconnaissance, pour chaque panne, de la panne première, à partir des informations connues dans l'étape 1
3. affectation du temps d'arrêt (ou de tout autre élément d'appréciation choisi) à la panne première et éventuellement, avec les coefficients appropriés, aux autres éléments sous contrôle qui, du fait de la panne première, soit ont déclenché une alarme, soit ont dû être affectés par l'une des pannes première ou secondaire(s) même s'ils n'ont pas généré d'alarme eux-mêmes.

## Patentansprüche

1. System zur vollständigen Automatisierung der Verfolgung des Betriebs von "Maschinen"-Strecken mit miteinander verbundenen logischen Systemen, **dadurch gekennzeichnet,** dass es drei Module umfasst:
1. Modul, das die "Maschinen"-Wechselwirkungen jeder Art, die sich auf der Ebene der Störungen auswirken können, zwischen den überwachten Elementen kennt,
2. Modul, das bei jeder Störung ausgehend von im Modul 1 enthaltenen Informationen die erste Störung erkennt,
3. Modul, das die Stillstandszeit (oder jedes andere gewählte Bewertungselement) der ersten Störung und ggf., mit den geeigneten Koeffizienten, den anderen überwachten Elementen zuordnet, die aufgrund der ersten Störung entweder einen Alarm ausgelöst haben oder auf die die erste oder eine der zweiten Pannen eine Auswirkung gehabt haben muss, selbst wenn sie selbst keinen Alarm erzeugt haben.

2. System nach Anspruch 1, **dadurch gekennzeichnet,** dass das Modul 1 nur von einem Teil der "Maschinen"-Wechselwirkungen zwischen nur einem Teil der überwachten Elemente Kenntniss hat.

3. System nach Anspruch 1 oder 2, **dadurch gekennzeichnet,** dass das Modul 1 eine Datenbank umfasst, in die die funktionellen Verbindungen der Maschine eingegeben sind.

4. System nach Anspruch 3, **dadurch gekennzeichnet,** dass das Modul 1 das Funktionsschema jedes überwachten Elements stromauf und stromab der Strecke kennt und bestimmen kann, ob die Störung einen internen oder einen externen Ursprung hat.

5. Maschine oder "Maschinen"-Strecke mit einem System nach einem der Ansprüche 1 bis 4.

6. Verfahren zur Optimierung der Produktion, insbesondere von "Maschinen"-Strecken, **dadurch gekennzeichnet,** dass es drei Schritte umfasst:
1, Kenntnis der "Maschinen"-Wechselwirkungen jeder Art, die sich auf der Ebene der Störungen auswirken können, zwischen den überwachten Elementen,
2. Bei jeder Störung Erkennen der ersten Störung ausgehend von den im Schritt 1 aufgenommenen Informationen.
3. Zuordnung der Stillstandszeit (oder jedes anderen gewählten Beurteilungselements) zur ersten Störung und ggf., mit den geeigneten Koeffizienten, zu den anderen überwachten Elementen, die aufgrund der ersten Störung entweder einen Alarm ausgelöst haben oder auf die die erste oder eine der zweiten Störungen eine Auswirkung gehabt haben muss, selbst wenn sie selbst keinen Alarm erzeugt haben.

## Claims

1. A system for the total automation of activity monitoring of "machine" lines, comprising interconnected logic systems, **characterised in that** it comprises three modules :
1. a module recognising "machine" interactions of any type, which could have an effect with regard to failures, between the elements being monitored
2. a recognition module, for each failure, of the first failure, based on the information contained in module 1
3. a module for allocation of down time (or of any other assessment element chosen) to the first failure and, optionally, with the appropriate coefficients, to the other elements being monitored which, as a result of the first failure, have either triggered an alarm or have been affected by one of the first or secondary failures, even if they have not generated an alarm themselves.

2. A system according to claim 1, **characterised in that** the module 1 only recognises some of the machine interactions, between only some of the elements being monitored.

3. A system according to claim 1 or 2, **characterised in that** the module 1 comprises a databank into which are entered the functional connections of the machine.

4. A system according to claim 3, **characterised in that** the module 1 recognises the functional diagram of each element being monitored, upstream line, downstream line, and can determine whether the failure is of internal or external origin.

5. A machine or machine line comprising a system according to any one of claims 1 to 4.

6. A method of optimising production, in particular of "machine" lines, **characterised in that** it comprises three stages:
1. recognition of the "machine" interactions of any type, which could have an effect with regard to failures, between the elements being monitored
2. recognition, for each failure, of the first failure, based on the information known in step 1
3. allocation of down time (or of any other assessment element chosen) to the first failure and, optionally, with the appropriate coefficients, to the other elements being monitored which, as a result of the first failure, have either triggered an alarm or have been affected by one of the first or secondary failures, even if they have not generated an alarm themselves.
